# EUROPEAN PATENT SPECIFICATION

(11) **EP 2 950 044 B1**
(45) Date of publication and mention of the grant of the patent: **17.10.2018**
(21) Application number: 15169069.0
(22) Date of filing: 25.05.2015
(51) Int. Cl.: G01B 11/27

(54) **METHOD AND TERMINAL FOR MEASURING ANGLE**
VERFAHREN UND ENDGERÄT ZUR WINKELMESSUNG
PROCÉDÉ ET TERMINAL DE MESURE D'ANGLE

(30) Priority: 26.05.2014 CN 201410225638
(43) Date of publication of application: 02.12.2015
(73) Proprietor: Xiaomi Inc., Beijing 100085 (CN)
(72) Inventor: Hu, Xiaowei, BEIJING 100085 (CN); Han, Wei, BEIJING 100085 (CN); Zhu, Yin, BEIJING 100085 (CN)
(74) Representative: Perrot, Emilie

(56) References cited:
- JP-A- 2002 271 654
- JP-A- 2006 165 941
- JP-A- 2008 061 083
- US-A1- 2008 204 566

## Description

### TECHNICAL FIELD

The present disclosure generally relates to the field of computer technology, and particularly, to a method, an apparatus and a terminal for measuring an angle.

### BACKGROUND

With the development of terminal technology, terminals tend to have increasingly versatile functions. For example, a gradienter APP (APPlication) may be installed on a terminal, to detect whether the terminal is horizontal.

In the related art, if an angle between the terminal and a horizontal plane is measured by the gradienter APP, the installed gradienter APP is initiated by the terminal, and a measurement interface provided by the gradienter APP is displayed on the terminal interface. For example, the measurement interface includes liquid and bubbles accommodated in a container, and during the turning of the terminal, the bubbles keep turning with the terminal. The angle between the terminal and the horizontal plane is determined to be 0 if the bubbles are located in a middle of the container.

In the process of implementing the present disclosure, it is found by the inventor that at least the following deficiency exists in the related art: the gradienter APP may only measure whether the terminal is horizontal, so the angle measuring function of the terminal is deficient.
Document US 2008/204566 A1 discloses an image pickup apparatus, document JP 2008 061083 A discloses an imaging apparatus and a control method thereof, document JP 2006 165941 A discloses an image pickup device, a posture adjustment method for an image, a display control method and a program, and document JP 2002 271654 discloses an electronic camera.

### SUMMARY

In order to solve the issue in the related art, a method in accordance with the independent claim 1 and a terminal in accordance with the independent claim 6 are provided by the present disclosure.

According to a first aspect of embodiments of the present disclosure, there is provided a method for measuring an angle, including: displaying a horizontal reference line and a measurement line as well as an object currently photographed by a camera in a terminal interface, a plane determined by the measurement line and the horizontal reference line being parallel with the display interface, and the measurement line being relatively static in respect to the display interface; during a process wherein the terminal is turned to cause an edge of the object to be parallel with the measurement line, calculating an angle between the measurement line and the horizontal reference line; and determining an angle obtained when the edge is parallel with the measurement line as an angle between the object and a horizontal plane.

Optionally, the displaying step of a horizontal reference line and a measurement line as well as an object currently photographed by a camera in a terminal interface includes: detecting whether the terminal is in an inclined state; and if it is detected that the terminal is in the inclined state, starting the camera, and displaying the horizontal reference line and the measurement line as well as the object currently photographed by the camera in the terminal.

Optionally, the detecting step of whether the terminal is in an inclined state includes: measuring an inclined angle between the terminal and the horizontal plane; detecting whether the inclined angle falls into a preset angle range; and if it is detected that the inclined angle falls into the preset angle range, determining that the terminal is in the inclined state.

Optionally, during a process wherein the terminal is turned to cause an edge of the object to be parallel with the measurement line, the calculating step of an angle between the measurement line and the horizontal reference line, includes: if the measurement line is parallel with or coincident with the horizontal reference line at an initial moment, measuring a rotating angle of the measurement line in respect to the horizontal reference line, and determining the rotating angle as the angle between the measurement line and the horizontal reference line; and if there is an initial angle between the measurement line and the horizontal reference line at the initial moment, measuring the rotating angle of the measurement line in respect to the horizontal reference line, calculating an angle difference by subtracting a value of the initial angle from the rotating angle, and determining the angle difference as the angle between the measurement line and the horizontal reference line.

Optionally, the method further includes: if the camera photographs another object, during a process wherein the terminal is turned to cause an edge of another object to be parallel with the measurement line, calculating an angle between the measurement line and the horizontal reference line; determining an angle obtained when the edge of another object is parallel with the measurement line as an angle between another object and the horizontal plane; calculating a difference value of an angle by subtracting the angle between another object and the horizontal plane from the angle between the object and the horizontal plane; and determining an absolute value of the difference value as the angle between the object and another object.

According to a second aspect of embodiments of the present disclosure, there is provided an apparatus for measuring an angle, including: a display module, configured to display a horizontal reference line and a measurement line as well as an object currently photographed by a camera in a terminal interface, a plane determined by the measurement line and the horizontal reference line being parallel with the display interface, and the measurement line being relatively static in respect to the display interface; a first calculation module, configured to, during a process wherein the terminal is turned to cause an edge of the object to be parallel with the measurement line, calculate an angle between the measurement line and the horizontal reference line; and a first determination module, configured to determine an angle obtained by the first calculation module when the edge is parallel with the measurement line as an angle between the object and a horizontal plane.

Optionally, the display module includes: a detection unit, configured to detect whether the terminal is in an inclined state; and a display unit, configured to, if the detection unit detects that the terminal is in the inclined state, start the camera, and display the horizontal reference line and the measurement line as well as the object currently photographed by the camera on the terminal.

Optionally, the detection unit includes: a measurement subunit, configured to measure an inclined angle between the terminal and the horizontal plane; a detection subunit, configured to detect whether the inclined angle detected by the measurement subunit falls into a preset angle range; and a determination subunit, configured to, if it is detected that the inclined angle falls into the preset angle range, determine that the terminal is in the inclined state.

Optionally, the first calculation module includes: a first calculation unit, configured to, if the measurement line is parallel with or coincident with the horizontal reference line at an initial moment, measure a rotating angle of the measurement line in respect to the horizontal reference line, and determine the rotating angle as the angle between the measurement line and the horizontal reference line; and a second calculation unit, configured to, if there is an initial angle between the measurement line and the horizontal reference line at the initial moment, measure the rotating angle of the measurement line in respect to the horizontal reference line, calculate an angle difference by subtracting a value of the initial angle from the rotating angle, and determine the angle difference as the angle between the measurement line and the horizontal reference line.

Optionally, the apparatus further includes: a second calculation module, configured to, if the camera photographs another object, during a process wherein the terminal is turned to cause an edge of another object to be parallel with the measurement line, calculate an angle between the measurement line and the horizontal reference line; a second determination module, configured to determine an angle obtained by the second calculation module when the edge of another object is parallel with the measurement line as an angle between another object and the horizontal plane; a third calculation module, configured to calculate a difference value of an angle by subtracting the angle between another object and the horizontal plane from the angle between the object and the horizontal plane; and a third determination module, configured to determine an absolute value of the difference value as the angle between the object and another object.

According to a third aspect of embodiments of the present disclosure, there is provided a terminal, including: a processor; and a memory, configured to store instructions executable by the processor. The processor is configured to: display a horizontal reference line and a measurement line as well as an object currently photographed by a camera in a terminal interface, a plane determined by the measurement line and the horizontal reference line being parallel with the display interface, and the measurement line being relatively static in respect to the display interface; during a process wherein the terminal is turned to cause an edge of the object to be parallel with the measurement line calculate an angle between the measurement line and the horizontal reference line; and determine an angle obtained when the edge is parallel with the measurement line as an angle between the object and a horizontal plane.

According to a fourth aspect of embodiments of the present disclosure, a computer program is provided, this computer program including instructions for executing the steps of a method for measuring an angle as described above when said program is executed by a computer.

This program can use any programming language and take the form of source code, object code or a code intermediate between source code and object code, such as a partially compiled form, or any other desirable form.

According to a fifth aspect of embodiments of the present disclosure, a recording medium readable by a computer is provided, this recording medium having recorded thereon a computer program including instructions for executing the steps of a method for measuring an angle as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Some advantageous effects brought by the technical solutions provided by the embodiments of the present disclosure may include the follows.

A horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle obtained when the edge is parallel with the measurement line is determined as an angle between the object and the horizontal plane. Therefore, when the measurement line is parallel with the edge of the object in real world, the terminal may measure the angle between the object and the horizontal plane, so that the issue that the angle measuring function of the terminal is deficient may be solved, and thus an effect of expanding the angle measuring function of the terminal is achieved.

It should be understood that, the general description above and the detailed description below are only exemplary, and do not limit the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig.1A is a flow chart showing a method for measuring an angle according to an exemplary embodiment.
Fig.1B is a schematic view showing a first horizontal reference line and a first measurement line according to the embodiment of fig. 1A.
Fig.1C is a schematic view showing a second horizontal reference line and a second measurement line according to the embodiment of fig. 1A.
Fig.2A is a flow chart showing a method for measuring an angle according to another exemplary embodiment.
Fig.2B is a schematic view showing a third horizontal reference line and a third measurement line according to the embodiment of fig. 2A.
Fig.2C is a schematic view showing an application of an angle measurement according to the embodiment of fig. 2A.
Fig.3 is a block diagram showing an apparatus for measuring an angle according to an exemplary embodiment.
Fig.4 is a block diagram showing an apparatus for measuring an angle according to an exemplary embodiment.
Fig.5 is a block diagram showing a device for measuring an angle according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

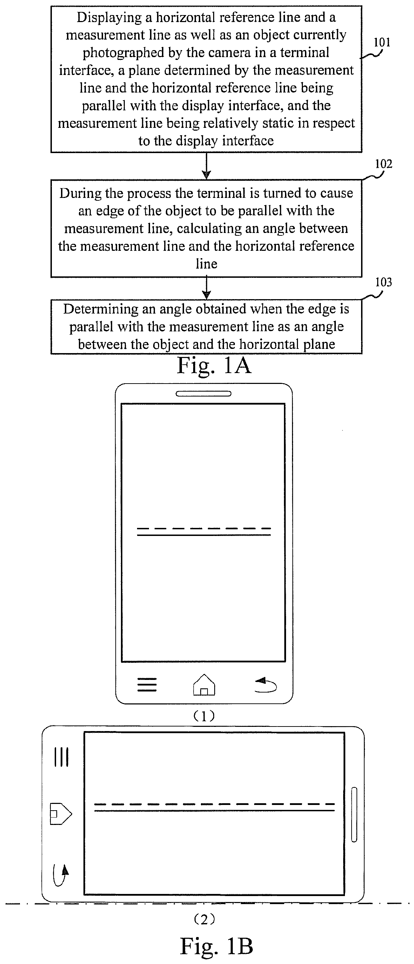

Fig.1A is a flow chart showing a method for measuring an angle according to an exemplary embodiment. As shown in Fig.1A, the method for measuring an angle may be applied to, but not limited to, a terminal including a camera, and includes the following steps.

In step 101, a horizontal reference line and a measurement line as well as an object currently photographed by the camera are displayed in a terminal interface (or display interface), a plane determined according to the measurement line and the horizontal reference line being parallel with the display interface, and the measurement line being relatively static in respect to the display interface.

The horizontal reference line is a reference line configured to indicate a horizontal direction and which will always remain horizontal. The measurement line is configured to measure an angle between an object and a horizontal plane and it turns with the terminal. That is, the measurement line is relatively static in respect to the display interface.

Fig.1B is a schematic view showing a first horizontal reference line and a first measurement line according to the embodiment. In Fig.1B, the measurement line is parallel with a long side of the terminal. Since the long side of the terminal is parallel with a horizontal plane and the measurement line is parallel with the long side of the terminal, the measurement line is parallel with the horizontal reference line. In the embodiment, a side of the terminal in the horizontal direction is determined as the long side of the terminal. For example, Fig.1B (1) shows a display interface of which a reading direction is vertical, for example, in a mobile phone; and Fig.1B (2) shows a display interface of which a reading direction is lateral, for example, in a tablet. In Fig.1B, a solid line represents the horizontal reference line, a dashed line represents the measurement line, and a dash dotted line represents the horizontal plane, which is omitted hereinafter.

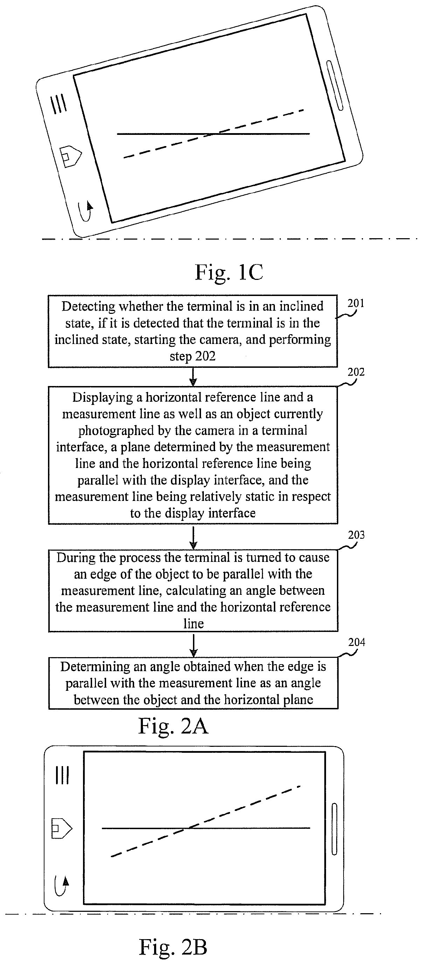

Fig.1C is a schematic view showing a second horizontal reference line and a second measurement line according to the embodiment. There is an angle between the long side of the terminal and the horizontal plane and the measurement line is parallel with the long side of the terminal, therefore, there is an angle between the measurement line and the horizontal reference line.

In step 102, during a process wherein the terminal is turned to cause an edge of the object to be parallel with the measurement line, an angle between the measurement line and the horizontal reference line is calculated.

The measurement line is relatively static in the display interface and the horizontal reference line remains horizontal, therefore during the turning of the terminal, an included angle is formed between the measurement line and the horizontal reference line, and the included angle may be measured.

In step 103, an angle, obtained when the edge is parallel with the measurement line, is determined as an angle between the object and the horizontal plane.

When the measurement line is parallel with the edge of the object, the angle between the measurement line and the horizontal reference line is the angle between the object and the horizontal plane. Thus, the terminal may determine the angle, calculated when the edge of the object is parallel with the measurement line, as the angle between the object and the horizontal plane.

Accordingly, in the method for measuring an angle provided by the present disclosure, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle, obtained when the edge is parallel with the measurement line, is determined as an angle between the object and the horizontal plane. Therefore, when the measurement line is parallel with the edge of the object in real world, the terminal may measure the angle between the object and the horizontal plane, and thus the issue that the angle measuring function of the terminal is deficient may be solved, so as to achieve an effect of expanding the angle measuring function of the terminal.

Fig.2A is a flow chart showing a method for measuring an angle according to another exemplary embodiment. In this embodiment, a gradienter APP is employed to measure an angle between a terminal and a horizontal plane. As shown in Fig.2A, the method for measuring an angle may be applied to, but not limited to, a terminal including a camera and a gradienter APP, and includes the following steps.

In step 201, it is detected whether the terminal is in an inclined state. If it is detected that the terminal is in the inclined state, the camera is started, and the process proceeds to step 202.

If there is no included angle between the terminal and the horizontal plane, the object to be measured by the terminal is in the horizontal plane. At this time, an angle between the object and the horizontal plane is 0°, and no angle measurement is needed by the terminal. In order to avoid the waste of resources by triggering a process of an angle measurement in case where no angle measurement is needed by the terminal, it may be detected whether the terminal is in the inclined state. If the terminal is in the inclined state, the process of the angle measurement is started, and the angle measurement is performed by starting the camera per-installed in the terminal; and if the terminal is in a horizontal state, the process of the angle measurement is not started.

The detecting step of whether the terminal is in the inclined state includes the follows.
1) An inclined angle between the terminal and the horizontal plane is measured.
2) It is detected whether the inclined angle falls into a preset angle range. and
3) If it is detected that the inclined angle falls into the preset angle range, it is determined that the terminal is in the inclined state.

When measuring whether the terminal is in the inclined state, the terminal may start the gradienter APP pre-installed in the terminal, and the inclined angle between the terminal and the horizontal plane is measured by the gradienter APP. The inclined angle refers to a rotating angle of the interface, rotated from a direction of a bottom side or a lateral side of the terminal to the current posture when the terminal interface faces upward and is parallel with the horizontal plane.

The inclined angle of the terminal may be measured by the gradienter APP according to various well known techniques, and will not be repeated herein.

After acquiring the inclined angle measured by the gradienter APP, the terminal may also compare the inclined angle with the preset angle range. If the inclined angle falls into the angle range, it is determined that the terminal is in the inclined state; and if the inclined angle does not fall into the angle range, it is determined that the terminal is in the horizontal state. The angle range may be set and modified. For example, the angle range is (45°, 135°), or is modified to (5°, 175°), and so on.

In step 202, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface.

The horizontal reference line is a reference line configured to indicate a horizontal direction and which always remains horizontal. The measurement line is configured to measure an angle between an object and a horizontal plane and it is relatively static in respect to the display interface. The number of the measurement line is one or more, and in this embodiment, for example, the number of the measurement line is one.

The measurement line may be parallel with a long side or a short side of the terminal, referring to the first horizontal reference line and the first measurement line shown in the schematic view of Fig.1B, and the second horizontal reference line and the second measurement line shown in the schematic view of Fig.1C. The measurement line may also be not parallel with the long side or the short side of the terminal, referring to the third horizontal reference line and the third measurement line shown in the schematic view of Fig.2B. Since the long side of the terminal is parallel with the horizontal plane and the measurement line is not parallel with the long side of the terminal, the measurement line is not parallel with the horizontal reference line.

When the camera is in an ON state, the camera takes photos of the object in real time, and displays the photographed object on the display interface.

In step 203, during the process wherein the terminal is turned to cause an edge of the object to be parallel with the measurement line, an angle between the measurement line and the horizontal reference line is calculated.

The measurement line is relatively static in the display interface and the horizontal reference line remains horizontal, therefore during the turning of the terminal, an included angle is formed between the measurement line and the horizontal reference line, and the included angle may be measured by the gradienter APP.

The calculating step of an angle between the measurement line and the horizontal reference line during the process wherein the terminal is turned to cause an edge of the object to be parallel with the measurement line includes the follows.
1) If the measurement line is parallel with or coincident with the horizontal reference line at an initial moment, a rotating angle of the measurement line in respect to the horizontal reference line is measured, and the rotating angle is determined as the angle between the measurement line and the horizontal reference line.
2) If there is an initial angle between the measurement line and the horizontal reference line at the initial moment, the rotating angle of the measurement line in respect to the horizontal reference line is measured, an angle difference is calculated by subtracting a value of the initial angle from the rotating angle, and the angle difference is determined as the angle between the measurement line and the horizontal reference line.

During calculating the angle, if the measurement line is parallel with or coincident with the horizontal reference line at the initial moment, the rotating angle of the measurement line relative to the horizontal reference line is a rotating angle of the terminal relative to the horizontal plane. The gradienter APP may measure the rotating angle of the terminal relative to the horizontal plane, and the measured angle is determined as the angle between the measurement line and the horizontal reference line. If there is an initial angle between the measurement line and the horizontal reference line at the initial moment, the gradienter APP acquires in advance the initial angle between the terminal and the horizontal plane before the user turns the terminal; the user turns the terminal, and stops turning of the terminal when the edge of the object photographed by the camera is parallel with the measurement line in the display interface; the gradienter APP measures the rotating angle between the terminal and the horizontal plane; and the angle between the measurement line and the horizontal reference line is obtained by subtracting the initial angle from the rotating angle.

Optionally, in order to indicate the rotating angle to the user, the gradienter APP may measure the angle through the above method at a predetermined interval, and display the measured angle in the display interface during the turning of the terminal.

During determining whether the edge of the object is parallel with the measurement line, the user may hold the terminal at the position for a predetermined period, and after the terminal detects that the terminal is held at a certain position for the predetermined period, the edge of the object is determined to be parallel with the measurement line, and the gradienter APP is triggered to calculate an angle; or, during determining whether the edge of the object is parallel with the measurement line, the user may send a trigger signal to the terminal, and when the terminal receives the trigger signal, the edge of the object is determined to be parallel with the measurement line, and the gradienter APP is triggered to calculate an angle. The trigger signal may be that a button provided on the display interface is clicked, or, a predetermined gesture operation in the display interface is performed, and the like, which is not limited in the embodiments.

In step 204, an angle, obtained when the edge is parallel with the measurement line, is determined as an angle between the object and the horizontal plane.

When the measurement line is parallel with the edge of the object, the angle between the measurement line and the horizontal reference line is the angle between the object and the horizontal plane. Thus, the terminal may determine the angle, calculated when the edge of the object is parallel with the measurement line, as the angle between the object and the horizontal plane.

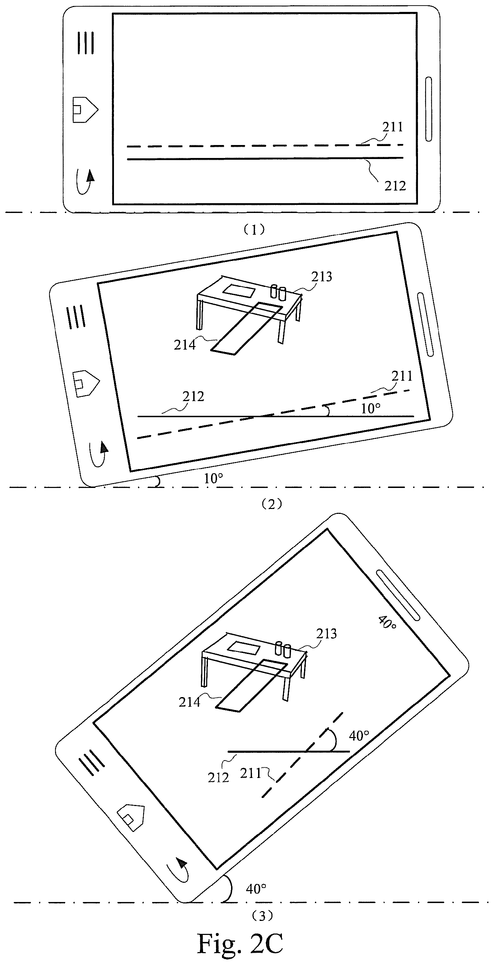

For a better understanding, the embodiment is illustrated by taking an example of the process of the angle measurement in which the terminal is laterally placed. Fig.2C is a schematic view showing an application of an angle measurement according to the embodiment. In Fig.2C, the measurement line is parallel with the long side of the terminal and the preset angle range is (10°, 170°).
① Before the user turns the terminal, the angle between the terminal and the horizontal plane is 0°, therefore a measurement line 211 and a horizontal reference line 212 are displayed in the display interface, the measurement line 211 being parallel with the horizontal reference line 212, referring to the first angle measurement shown in the schematic view of Fig.2C (1);
② During the process wherein the user turns the terminal, the angle between the terminal and the horizontal plane is measured by the gradienter APP. When the angle between the terminal and the horizontal plane reaches 10°, which falls into the angle range (10°, 170°), the terminal starts the camera, and displays the measurement line 211 and the horizontal reference line 212 as well as the object photographed by the camera in real time. It is assumed that a table 213 and a plate 214 with the plate 214 reclining against the table 213 are photographed by the camera, referring to the second angle measurement shown in the schematic view of Fig.2C (2).
③ When the user turns the terminal to cause the edge of the plate 214 to be parallel with the measurement line 211, the angle between the measurement line 211 and the horizontal reference line 212 is calculated as 40° by the gradienter APP. The angle of 40° is determined as the angle between the plate 214 and the horizontal plane, and is displayed in the display interface, referring to the third angle measurement shown in the schematic view of Fig.2C (3).

It should be noted that the terminal may measure an angle between two objects, and the method also includes the follows:
1) If the camera photographs another object, during a process wherein the terminal is turned to cause an edge of another object to be parallel with the measurement line, an angle between the measurement line and the horizontal reference line is calculated.
2) An angle obtained when the edge of another object is parallel with the measurement line is determined as an angle between another object and the horizontal plane.
3) A difference value of an angle by subtracting the angle between another object and the horizontal plane from the angle between the object and the horizontal plane is calculated.
4) An absolute value of the difference value is determined as the angle between the object and another object.

Before or after the terminal performs steps 201 to 204 to acquire the angle between the object and the horizontal plane, steps 201 to 204 may also be performed to acquire the angle between another object and the horizontal plane. Then a difference value of an angle by subtracting the angle between another object and the horizontal plane from the angle between the object and the horizontal plane is calculated, and an absolute value of the difference value is determined as the angle between the object and another object.

For example, the measured angle between the object and the horizontal plane is 49° when the terminal performs steps 201 to 204 for a first time, and the angle between another object and the measured horizontal plane is 13° when the terminal performs steps 201 to 204 for a second time, and thus the angle between the object and another object is 36°.

Accordingly, in the method for measuring an angle provided by the present disclosure, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle obtained when the edge is parallel with the measurement line is determined as an angle between the object and the horizontal plane. Therefore, when the measurement line is parallel with the edge of the object in real world, the terminal may measure the angle between the object and the horizontal plane, and thus the issue that the angle measuring function of the terminal is deficient may be solved, and an effect of expanding the angle measuring function of the terminal is achieved.

In addition, by starting the camera after it is detected that the terminal is in the inclined state, the waste of resources may be avoided during measuring the angle between the object in the horizontal plane and the horizontal plane by the terminal, so that an effect of saving resources of the terminal is achieved.

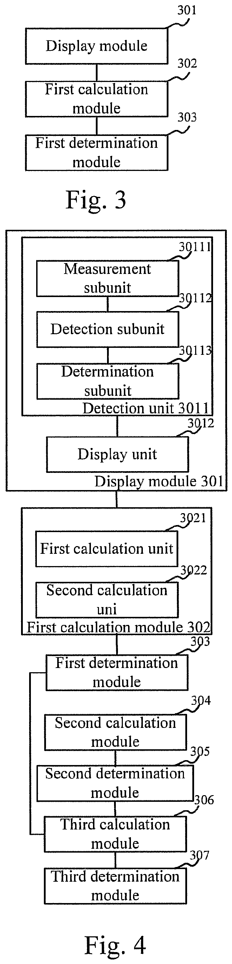

Fig.3 is a block diagram showing an apparatus for measuring an angle according to an exemplary embodiment. As shown in Fig.3, the apparatus for measuring an angle may be applied to, but not limited to, a terminal including a camera. and the apparatus includes: a display module 301, a first calculation module 302 and a first determination module 303.

The display module 301 is configured to display a horizontal reference line and a measurement line as well as an object currently photographed by the camera in a terminal interface, a plane determined by the measurement line and the horizontal reference line being parallel with the display interface, and the measurement line being relatively static in respect to the display interface.

The first calculation module 302 is configured, during a process wherein the terminal is turned to cause an edge of the object to be parallel with the measurement line, to calculate an angle between the measurement line and the horizontal reference line.

The first determination module 303 is configured to determine an angle, obtained by the first calculation module 302 when the edge is parallel with the measurement line, as an angle between the object and the horizontal plane.

Accordingly, in the apparatus for measuring an angle provided by the present disclosure, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle obtained when the edge is parallel with the measurement line is determined as an angle between the object and the horizontal plane. Therefore, when the measurement line is parallel with the edge of the object in real world, the terminal may measure the angle between the object and the horizontal plane, so that the issue that the angle measuring function of the terminal is deficient may be solved, and thus an effect of expanding the angle measuring function of the terminal is achieved.

Fig.4 is a block diagram showing an apparatus for measuring an angle according to an exemplary embodiment. As shown in Fig.4, the apparatus for measuring an angle may be applied to, but not limited to, a terminal including a camera. The apparatus includes: a display module 301, a first calculation module 302 and a first determination module 303.

The display module 301 is configured to display a horizontal reference line and a measurement line as well as an object currently photographed by the camera in a terminal interface, a plane determined by the measurement line and the horizontal reference line being parallel with the display interface, and the measurement line being relatively static in respect to the display interface.

The first calculation module 302 is configured, during the process wherein the terminal is turned to cause an edge of the object to be parallel with the measurement line, to calculate an angle between the measurement line and the horizontal reference line.

The first determination module 303 is configured to determine an angle obtained by the first calculation module 302 when the edge is parallel with the measurement line as an angle between the object and the horizontal plane.

Optionally, the display module 301 includes: a detection unit 3011 and a display unit 3012.

The detection unit 3011 is configured to detect whether the terminal is in an inclined state.

The display unit 3012 is configured to start the camera, and to display the horizontal reference line and the measurement line as well as the object currently photographed by the camera on the terminal, if the detection unit 3011 detects that the terminal is in the inclined state.

Optionally, the detection unit 3011 includes: a measurement subunit 30111, a detection subunit 30112 and a determination subunit 30113.

The measurement subunit 30111 is configured to measure an inclined angle between the terminal and the horizontal plane.

The detection subunit 30112 is configured to detect whether the inclined angle detected by the measurement subunit 30111 falls into a preset angle range.

The determination subunit 30113 is configured to determine that the terminal is in the inclined state if it is detected that the inclined angle falls into the preset angle range.

Optionally, the first calculation module 302 includes: a first calculation unit 3021 and a second calculation unit 3022.

The first calculation unit 3021 is configured, if the measurement line is parallel with or coincident with the horizontal reference line at an initial moment, to measure a rotating angle of the measurement line in respect to the horizontal reference line, and to determine the rotating angle as the angle between the measurement line and the horizontal reference line.

The second calculation unit 3022 is configured, if there is an initial angle between the measurement line and the horizontal reference line at the initial moment, to measure the rotating angle of the measurement line in respect to the horizontal reference line, to calculate an angle difference by subtracting a value of the initial angle from the rotating angle, and to determine the angle difference as the angle between the measurement line and the horizontal reference line.

Optionally, the apparatus for measuring an angle also includes: a second calculation module 304, a second determination module 305, a third calculation module 306 and a third determination module 307.

The second calculation module 304 is configured, if the camera photographs another object, to calculate an angle between the measurement line and the horizontal reference line during a process wherein the terminal is turned to cause an edge of another object to be parallel with the measurement line.

The second determination module 305 is configured to determine an angle obtained by the second calculation module 304 when the edge of another object is parallel with the measurement line as an angle between another object and the horizontal plane.

The third calculation module 306 is configured to calculate a difference value of an angle by subtracting the angle between another object and the horizontal plane from the angle between the object and the horizontal plane.

The third determination module 307 is configured to determine an absolute value of the difference value as the angle between the object and another object.

Accordingly, in the apparatus for measuring an angle provided by the present disclosure, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle obtained when the edge is parallel with the measurement line is determined as an angle between the object and the horizontal plane. Therefore, when the measurement line is parallel with the edge of the object in real world, the terminal may measure the angle between the object and the horizontal plane, so that the issue that the angle measuring function of the terminal is deficient may be solved, and thus an effect of expanding the angle measuring function of the terminal is achieved.

In addition, by starting the camera after it is detected that the terminal is in the inclined state, the waste of resources may be avoided in measuring the angle between the object in the horizontal plane and the horizontal plane by the terminal, so that an effect of saving resources of the terminal is achieved.

With respect to the apparatus in the above embodiments, specific operations performed by each modules have been described in detail in the embodiments of related method, and detailed description is omitted herein.

A terminal is also provided by exemplary embodiments of the present disclosure, including: a processor; and a memory, configured to store instructions executable by the processor. The processor is configured to perform: displaying a horizontal reference line and a measurement line as well as an object currently photographed by the camera on a terminal interface, a plane determined by the measurement line and the horizontal reference line being parallel with the display interface, and the measurement line being relatively static in respect to the display interface; calculating an angle between the measurement line and the horizontal reference line during the process wherein the terminal is turned to cause an edge of the object to be parallel with the measurement line; and determine an angle obtained when the edge is parallel with the measurement line as an angle between the object and the horizontal plane.

Accordingly, in the terminal provided by the present disclosure, a horizontal reference line and a measurement line as well as an object currently photographed by the camera are displayed in a terminal interface, a plane determined by the measurement line and the horizontal reference line being parallel with the display interface, and the measurement line being relatively static in respect to the display interface; during the process wherein the terminal is turned to cause an edge of the object to be parallel with the measurement line, an angle between the measurement line and the horizontal reference line is calculated; and an angle obtained when the edge is parallel with the measurement line is determined as an angle between the object and the horizontal plane. Therefore, when the measurement line is parallel with the edge of the object in real world, the terminal may measure the angle between the object and the horizontal plane, so that the issue that the angle measuring function of the terminal is deficient may be solved, and thus an effect of expanding the angle measuring function of the terminal is achieved.

With respect to the terminal in the above embodiments, specific operations performed by each modules have been described in detail in the embodiments of related method, and detailed description is omitted herein.

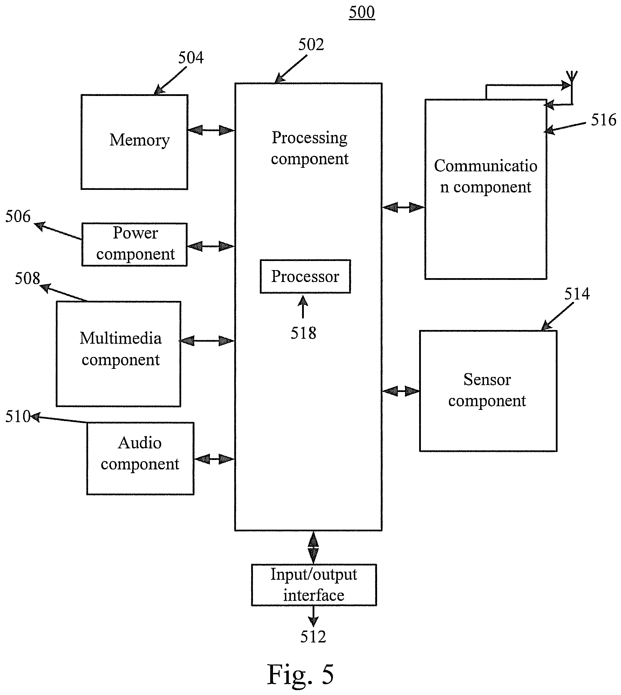

Fig.5 is a block diagram showing a device 500 for measuring an angle according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for measuring an angle, **characterized in that** the method comprises:
displaying (101, 202) a horizontal reference line and a measurement line as well as an object currently photographed by a camera in a display interface of a terminal, a plane determined by the measurement line and the horizontal reference line being parallel with the display interface, and the measurement line being relatively static in respect to the display interface;
during a process wherein the terminal is turned to cause an edge of the object to be parallel with the measurement line, calculating (102, 203) an angle between the measurement line and the horizontal reference line; and
determining (103, 204) an angle obtained when the edge is determined to be parallel with the measurement line as an angle between the object and a horizontal plane.

2. The method according to claim 1, **characterized in that** the displaying step of a horizontal reference line and a measurement line as well as an object currently photographed by a camera in a display interface of a terminal comprises:
detecting (201) whether the terminal is in an inclined state; and
if it is detected that the terminal is in the inclined state, starting (202) the camera, and displaying the horizontal reference line and the measurement line as well as the object currently photographed by the camera in the terminal.

3. The method according to claim 2, **characterized in that** the detecting step (201) of whether the terminal is in an inclined state, comprises:
measuring an inclined angle between the terminal and the horizontal plane;
detecting whether the inclined angle falls into a preset angle range; and
if it is detected that the inclined angle falls into the preset angle range, determining that the terminal is in the inclined state.

4. The method according to any one of claims 1 to 3, **characterized in that** during a process wherein the terminal is turned to cause an edge of the object to be parallel with the measurement line, the calculating step (203) of an angle between the measurement line and the horizontal reference line, comprises:
if the measurement line is parallel with or coincident with the horizontal reference line at an initial moment, measuring a rotating angle of the measurement line in respect to the horizontal reference line, and determining the rotating angle as the angle between the measurement line and the horizontal reference line; and
if there is an initial angle between the measurement line and the horizontal reference line at the initial moment, measuring the rotating angle of the measurement line in respect to the horizontal reference line, calculating an angle difference by subtracting a value of the initial angle from the rotating angle, and determining the angle difference as the angle between the measurement line and the horizontal reference line.

5. The method according to any one of claims 1 to 4, **characterized in that** the method further comprises:
if the camera photographs another object, during a process wherein the terminal is turned to cause an edge of another object to be parallel with the measurement line, calculating an angle between the measurement line and the horizontal reference line;
determining an angle obtained when the edge of another object is parallel with the measurement line as an angle between another object and the horizontal plane;
calculating a difference value of an angle by subtracting the angle between another object and the horizontal plane from the angle between the object and the horizontal plane; and
determining an absolute value of the difference value as the angle between the object and another object.

6. A terminal comprising a camera and an apparatus for measuring an angle, **characterized in that** the apparatus comprises:
a display module (301), configured to display a horizontal reference line and a measurement line as well as an object currently photographed by the camera in a display interface of a terminal, a plane determined by the measurement line and the horizontal reference line being parallel with the display interface, and the measurement line being relatively static in respect to the display interface;
a first calculation module (302), configured to, during a process wherein the terminal is turned to cause an edge of the object to be parallel with the measurement line, calculate an angle between the measurement line and the horizontal reference line; and
a first determination module (303), configured to determine an angle obtained by the first calculation module when the edge is determined to be parallel with the measurement line as an angle between the object and a horizontal plane.

7. The terminal according to claim 6, **characterized in that** the display module (301) comprises:
a detection unit (3011), configured to detect whether the terminal is in an inclined state; and
a display unit (3012), configured to, if the detection unit (3011) detects that the terminal is in the inclined state, start the camera, and display the horizontal reference line and the measurement line as well as the object currently photographed by the camera on the terminal.

8. The terminal according to claim 7, **characterized in that** the detection unit (3011) comprises:
a measurement subunit (30111), configured to measure an inclined angle between the terminal and the horizontal plane;
a detection subunit (30112), configured to detect whether the inclined angle detected by the measurement subunit falls into a preset angle range; and
a determination subunit (30113), configured to, if it is detected that the inclined angle falls into the preset angle range, determine that the terminal is in the inclined state.

9. The terminal according to any one of claims 6 to 8, **characterized in that** the first calculation module (302) comprises:
a first calculation unit (3021), configured to, if the measurement line is parallel with or coincident with the horizontal reference line at an initial moment, measure a rotating angle of the measurement line in respect to the horizontal reference line, and determine the rotating angle as the angle between the measurement line and the horizontal reference line; and
a second calculation unit (3022), configured to, if there is an initial angle between the measurement line and the horizontal reference line at the initial moment, measure the rotating angle of the measurement line in respect to the horizontal reference line, calculate an angle difference by subtracting a value of the initial angle from the rotating angle, and determine the angle difference as the angle between the measurement line and the horizontal reference line.

10. The terminal according to any one of claims 6 to 9, **characterized in that** the apparatus further comprises:
a second calculation module (304), configured to, if the camera photographs another object, during a process wherein the terminal is turned to cause an edge of another object to be parallel with the measurement line, calculate an angle between the measurement line and the horizontal reference line;
a second determination module (305), configured to determine an angle obtained by the second calculation module when the edge of another object is parallel with the measurement line as an angle between another object and the horizontal plane;
a third calculation module (306), configured to calculate a difference value of an angle by subtracting the angle between another object and the horizontal plane from the angle between the object and the horizontal plane; and
a third determination module (307), configured to determine an absolute value of the difference value as the angle between the object and another object.

11. A computer program, including instructions for executing the steps of a method for measuring an angle according to any one of claims 1 to 5 when said program is executed by a computer.

12. A recording medium readable by a computer and having recorded thereon a computer program including instructions for executing the steps of a method for measuring an angle according to any one of claims 1 to 5.

## Patentansprüche

1. Verfahren zum Messen eines Winkels, **dadurch gekennzeichnet, dass** das Verfahren umfasst:
Anzeigen (101, 202) einer horizontalen Bezugslinie und einer Messlinie sowie eines Objekts, das momentan von einer Kamera fotografiert wird, auf einer Anzeigeschnittstelle eines Endgeräts, wobei eine Ebene, die durch die Messlinie und die horizontale Bezugslinie bestimmt wird, parallel zu der Anzeigeschnittstelle ist, und die Messlinie relativ statisch in Bezug auf die Anzeigeschnittstelle ist,
während eines Prozesses, bei dem das Endgerät gedreht wird, um zu bewirken, dass eine Kante des Objekts parallel zu der Messlinie ist, Berechnen (102, 203) eines Winkels zwischen der Messlinie und der horizontalen Bezugslinie, und
Bestimmen (103, 204) eines Winkels, der erhalten wird, wenn bestimmt wird, dass die Kante parallel zu der Messlinie ist, als einen Winkel zwischen dem Objekt und einer horizontalen Ebene.

2. Verfahren nach Anspruch 1, **dadurch gekennzeichnet, dass** der Schritt des Anzeigens einer horizontalen Bezugslinie und einer Messlinie sowie eines Objekts, das momentan von einer Kamera fotografiert wird, auf einer Anzeigeschnittstelle eines Endgeräts umfasst:
Erkennen (201), ob sich das Endgerät in einem geneigten Zustand befindet, und,
wenn erkannt wird, dass sich das Endgerät in dem geneigten Zustand befindet, Starten der Kamera (202) und Anzeigen der horizontalen Bezugslinie und der Messlinie sowie des Objekts, das momentan von der Kamera fotografiert wird, auf dem Endgerät.

3. Verfahren nach Anspruch 2, **dadurch gekennzeichnet, dass** der Erkennungsschritt (201), ob sich das Endgerät in einem geneigten Zustand befindet, umfasst:
Messen eines Neigungswinkels zwischen dem Endgerät und der horizontalen Ebene,
Erkennen, ob der Neigungswinkel in einen voreingestellten Winkelbereich fällt, und,
wenn erkannt wird, dass der Neigungswinkel in den voreingestellten Winkelbereich fällt, Bestimmen, dass sich das Endgerät in dem geneigten Zustand befindet.

4. Verfahren nach einem der Ansprüche 1 bis 3, **dadurch gekennzeichnet, dass** während eines Prozesses, bei dem das Endgerät gedreht wird, um zu bewirken, dass eine Kante des Objekts parallel zu der Messlinie ist, der Berechnungsschritt (203) eines Winkel zwischen der Messlinie und der horizontalen Bezugslinie umfasst:
wenn die Messlinie zu einem Anfangszeitpunkt parallel zu der horizontalen Bezugslinie ist oder damit übereinstimmt, Messen eines Drehwinkels der Messlinie in Bezug auf die horizontale Bezugslinie, und Bestimmen des Drehwinkels als der Winkel zwischen der Messlinie und der horizontalen Bezugslinie, und
wenn ein Anfangswinkel zwischen der Messlinie und der horizontalen Bezugslinie zu dem Anfangszeitpunkt vorhanden ist, Messen des Drehwinkels der Messlinie in Bezug auf die horizontale Bezugslinie, Berechnen einer Winkeldifferenz durch Subtrahieren eines Wertes des Anfangswinkels von dem Drehwinkel, und Bestimmen der Winkeldifferenz als den Winkel zwischen der Messlinie und der horizontalen Bezugslinie.

5. Verfahren nach einem der Ansprüche 1 bis 4, **dadurch gekennzeichnet, dass** das Verfahren ferner umfasst:
wenn die Kamera ein anderes Objekt fotografiert während eines Prozesses, bei dem das Endgerät gedreht wird, um zu bewirken, dass eine Kante eines anderen Objekts parallel zu der Messlinie ist, Berechnen eines Winkels zwischen der Messlinie und der horizontalen Bezugslinie,
Bestimmen eines Winkels, der erhalten wird, wenn die Kante eines anderen Objekts parallel zu der Messlinie ist, als ein Winkel zwischen einem anderen Objekt und der horizontalen Ebene,
Berechnen eines Differenzwertes eines Winkels durch Subtrahieren des Winkels zwischen einem anderen Objekt und der horizontalen Ebene von dem Winkel zwischen dem Objekt und der horizontalen Ebene, und
Bestimmen eines Absolutwertes des Differenzwertes als der Winkel zwischen dem Objekt und einem anderen Objekt.

6. Endgerät, umfassend eine Kamera und eine Vorrichtung zur Messung eines Winkels, **dadurch gekennzeichnet, dass** die Vorrichtung umfasst:
ein Anzeigemodul (301), das konfiguriert ist, eine horizontale Bezugslinie und eine Messlinie sowie ein Objekt, das momentan von der Kamera fotografiert wird, auf einer Anzeigeschnittstelle eines Endgeräts anzuzeigen, wobei eine Ebene, die durch die Messlinie und die horizontale Bezugslinie bestimmt ist, parallel zu der Anzeigeschnittstelle ist, und die Messlinie in Bezug auf die Anzeigeschnittstelle relativ statisch ist,
ein erstes Berechnungsmodul (302), das konfiguriert ist, während eines Prozesses, bei dem das Endgerät gedreht wird, um zu bewirken, dass eine Kante des Objekts parallel zu der Messlinie ist, einen Winkel zwischen der Messlinie und der horizontalen Bezugslinie zu berechnen, und
ein erstes Bestimmungsmodul (303), das konfiguriert ist, einen Winkel, der von dem ersten Berechnungsmodul erhalten wird, wenn bestimmt wird, dass die Kante parallel zu der Messlinie ist, als einen Winkel zwischen dem Objekt und einer horizontalen Ebene zu bestimmen.

7. Endgerät nach Anspruch 6, **dadurch gekennzeichnet, dass** das Anzeigemodul (301) umfasst:
eine Erkennungseinheit (3011), die konfiguriert ist, zu erkennen, ob sich das Endgerät in einem geneigten Zustand befindet, und
eine Anzeigeeinheit (3012), die konfiguriert ist, wenn die Erkennungseinheit (3011) erkennt, dass sich das Endgerät in dem geneigten Zustand befindet, die Kamera zu starten und die horizontale Bezugslinie und die Messlinie sowie Objekt, das momentan durch die Kamera fotografiert wird, auf dem Endgerät anzuzeigen.

8. Endgerät nach Anspruch 7, **dadurch gekennzeichnet, dass** die Erkennungseinheit (3011) umfasst:
eine Messuntereinheit (30111), die konfiguriert ist, einen Neigungswinkel zwischen dem Endgerät und der horizontalen Ebene zu Messen,
eine Erkennungsuntereinheit (30112), die konfiguriert ist, zu erkennen, ob der von der Messuntereinheit erkannte Neigungswinkel in einen voreingestellten Winkelbereich fällt, und
eine Bestimmungsuntereinheit (30113), die konfiguriert ist, dass, wenn erkannt wird, dass der Neigungswinkel in den voreingestellten Winkelbereich fällt, zu bestimmen, dass sich das Endgerät in dem geneigten Zustand befindet.

9. Endgerät nach einem der Ansprüche 6 bis 8, **dadurch gekennzeichnet, dass** das erste Berechnungsmodul (302) umfasst:
eine erste Berechnungseinheit (3021), die konfiguriert ist, wenn die Messlinie zu einem Anfangszeitpunkt parallel zu der horizontalen Bezugslinie ist oder damit übereinstimmt, einen Drehwinkel der Messlinie in Bezug auf die horizontale Bezugslinie zu messen, und den Drehwinkel als der Winkel zwischen der Messlinie und der horizontalen Bezugslinie zu bestimmen, und
eine zweite Berechnungseinheit (3022), die konfiguriert ist, wenn zu dem Anfangszeitpunkt ein Anfangswinkel zwischen der Messlinie und der horizontalen Bezugslinie vorhanden ist, den Drehwinkel der Messlinie in Bezug auf die horizontale Bezugslinie zu messen, eine Winkeldifferenz durch Subtrahieren eines Wertes des Anfangswinkels von dem Drehwinkel zu berechnen, und die Winkeldifferenz als den Winkel zwischen der Messlinie und der horizontalen Bezugslinie zu bestimmen.

10. Endgerät nach einem der Ansprüche 6 bis 9, **dadurch gekennzeichnet, dass** die Vorrichtung ferner umfasst:
ein zweites Berechnungsmodul (304), das konfiguriert ist, wenn die Kamera ein anderes Objekt fotografiert während eines Prozesses, bei dem das Endgerät gedreht wird, um zu bewirken, dass eine Kante eines anderen Objekts parallel zu der Messlinie ist, einen Winkel zwischen der Messlinie und der horizontale Bezugslinie zu berechnen,
ein zweites Bestimmungsmodul (305), das konfiguriert ist, einen Winkel, der durch das zweite Berechnungsmodul erhalten wird, wenn die Kante eines anderen Objekts parallel zu der Messlinie ist, als ein Winkel zwischen einem anderen Objekt und der horizontalen Ebene zu bestimmen,
ein drittes Berechnungsmodul (306), das konfiguriert ist, einen Differenzwert eines Winkels durch Subtrahieren des Winkels zwischen einem anderen Objekt und der horizontalen Ebene von dem Winkel zwischen dem Objekt und der horizontalen Ebene zu berechnen, und
ein drittes Bestimmungsmodul (307), das konfiguriert ist, einen Absolutwert des Differenzwertes als den Winkel zwischen dem Objekt und einem anderen Objekt zu bestimmen.

11. Computerprogramm, aufweisend Anweisungen zur Ausführung der Schritte eines Verfahrens zur Messung eines Winkels nach einem der Ansprüche 1 bis 5, wenn das Programm von einem Computer ausgeführt wird.

12. Aufzeichnungsmedium, das von einem Computer lesbar ist und auf dem ein Computerprogramm aufgezeichnet ist, das Anweisungen zur Ausführung der Schritte eines Verfahrens zur Messung eines Winkels nach einem der Ansprüche 1 bis 5 aufweist.

## Revendications

1. Procédé de mesure d'un angle, **caractérisé en ce que** le procédé comprend :
l'affichage (101, 202) d'une ligne de référence horizontale et d'une ligne de mesure et d'un objet actuellement photographié par un appareil photo sur une interface d'affichage d'un terminal, un plan déterminé par la ligne de mesure et la ligne de référence horizontale étant parallèle à l'interface d'affichage, et la ligne de mesure étant relativement statique par rapport à l'interface d'affichage ;
pendant un processus pendant lequel le terminal est tourné de sorte qu'un bord de l'objet soit parallèle à la ligne de mesure, le calcul (102, 203) d'un angle entre la ligne de mesure et la ligne de référence horizontale ; et
la détermination (103, 204) d'un angle obtenu lorsque le bord est déterminé comme étant parallèle à la ligne de mesure comme étant un angle entre l'objet et un plan horizontal.

2. Procédé selon la revendication 1, **caractérisé en ce que** l'étape d'affichage d'une ligne de référence horizontale et d'une ligne de mesure et d'un objet actuellement photographié par un appareil photo sur une interface d'affichage d'un terminal comprend :
la détection (201) du fait que le terminal soit dans un état incliné ou non ; et
s'il est détecté que le terminal se trouve dans l'état incliné, le déclenchement (202) de l'appareil photo, et l'affichage de la ligne de référence horizontale et de la ligne de mesure et de l'objet actuellement photographié par l'appareil photo dans le terminal.

3. Procédé selon la revendication 2, **caractérisé en ce que** l'étape de détection (201) du fait que le terminal se trouve dans un état incliné ou non comprend :
la mesure d'un angle d'inclinaison entre le terminal et le plan horizontal ;
la détection du fait que l'angle d'inclinaison se trouve ou non dans des limites d'angle prédéfinies ; et
s'il est détecté que l'angle d'inclinaison se trouve dans les limites d'angle prédéfinies, la détermination du fait que le terminal se trouve dans l'état incliné.

4. Procédé selon l'une quelconque des revendications 1 à 3, **caractérisé en ce que**, pendant un processus pendant lequel le terminal est tourné de sorte qu'un bord de l'objet soit parallèle à la ligne de mesure, l'étape de calcul (203) d'un angle entre la ligne de mesure et la ligne de référence horizontale comprend :
si la ligne de mesure est parallèle à ou coïncidente avec la ligne de référence horizontale à un moment initial, la mesure d'un angle de rotation de la ligne de mesure par rapport à la ligne de référence horizontale, et la détermination de l'angle de rotation comme étant l'angle entre la ligne de mesure et la ligne de référence horizontale ; et
s'il existe un angle initial entre la ligne de mesure et la ligne de référence horizontale au moment initial, la mesure de l'angle de rotation de la ligne de mesure par rapport à la ligne de référence horizontale, le calcul d'une différence d'angle en soustrayant une valeur de l'angle initial de l'angle de rotation, et la détermination de la différence d'angle comme étant l'angle entre la ligne de mesure et la ligne de référence horizontale.

5. Procédé selon l'une quelconque des revendications 1 à 4, **caractérisé en ce que** le procédé comprend en outre :
si l'appareil photo photographie un autre objet, pendant un processus pendant lequel le terminal est tourné de sorte qu'un bord d'un autre objet soit parallèle à la ligne de mesure, le calcul d'un angle entre la ligne de mesure et la ligne de référence horizontale ;
la détermination d'un angle obtenu lorsque le bord d'un autre objet est parallèle à la ligne de mesure comme étant un angle entre un autre objet et le plan horizontal ;
le calcul d'une valeur de différence d'un angle en soustrayant l'angle entre un autre objet et le plan horizontal de l'angle entre l'objet et le plan horizontal ; et
la détermination d'une valeur absolue de la valeur de différence comme étant l'angle entre l'objet et un autre objet.

6. Terminal comprenant un appareil photo et un appareil de mesure d'un angle, **caractérisé en ce que** l'appareil comprend :
un module d'affichage (301), configuré pour afficher une ligne de référence horizontale et une ligne de mesure et un objet actuellement photographié par l'appareil photo sur une interface d'affichage d'un terminal, un plan déterminé par la ligne de mesure et la ligne de référence horizontale étant parallèle à l'interface d'affichage, et la ligne de mesure étant relativement statique par rapport à l'interface d'affichage ;
un premier module de calcul (302), configuré pour, pendant un processus pendant lequel le terminal est tourné de sorte qu'un bord de l'objet soit parallèle à la ligne de mesure, calculer un angle entre la ligne de mesure et la ligne de référence horizontale ; et
un premier module de détermination (303), configuré pour déterminer un angle obtenu par le premier module de calcul lorsque le bord est déterminé comme étant parallèle à la ligne de mesure comme étant un angle entre l'objet et un plan horizontal.

7. Terminal selon la revendication 6, **caractérisé en ce que** le module d'affichage (301) comprend :
une unité de détection (3011), configurée pour détecter si le terminal se trouve dans un état incliné ou non ; et
une unité d'affichage (3012) configurée pour, si l'unité de détection (3011) détecte que le terminal se trouve dans l'état incliné, déclencher l'appareil photo, et afficher la ligne de référence horizontale et la ligne de mesure et l'objet actuellement photographié par l'appareil photo sur le terminal.

8. Terminal selon la revendication 7, **caractérisé en ce que** l'unité de détection (3011) comprend :
une sous-unité de mesure (30111), configurée pour mesurer un angle d'inclinaison entre le terminal et le plan horizontal ;
une sous-unité de détection (30112), configurée pour détecter si l'angle d'inclinaison détecté par la sous-unité de mesure se trouve ou non dans des limites d'angle prédéfinies ; et
une sous-unité de détermination (30113), configurée pour, s'il est détecté que l'angle d'inclinaison se trouve dans des limites d'angle prédéfinies, déterminer que le terminal se trouve dans l'état incliné.

9. Terminal selon l'une quelconque des revendications 6 à 8, **caractérisé en ce que** le premier module de calcul (302) comprend :
une première unité de calcul (3021), configurée pour, si la ligne de mesure est parallèle à ou coïncidente avec la ligne de référence horizontale à un moment initial, mesurer un angle de rotation de la ligne de mesure par rapport à la ligne de référence horizontale, et déterminer l'angle de rotation comme étant l'angle entre la ligne de mesure et la ligne de référence horizontale ; et
une seconde unité de calcul (3022), configurée pour, s'il existe un angle initial entre la ligne de mesure et la ligne de référence horizontale au moment initial, mesurer l'angle de rotation de la ligne de mesure par rapport à la ligne de référence horizontale, calculer une différence d'angle en soustrayant une valeur de l'angle initial de l'angle de rotation, et déterminer la différence d'angle comme étant l'angle entre la ligne de mesure et la ligne de référence horizontale.

10. Terminal selon l'une quelconque des revendications 6 à 9, **caractérisé en ce que** l'appareil comprend en outre :
un second module de calcul (304), configuré pour, si l'appareil photo photographie un autre objet, pendant un processus pendant lequel le terminal est tourné de sorte qu'un bord de l'autre objet soit parallèle à la ligne de mesure, calculer un angle entre la ligne de mesure et la ligne de référence horizontale ;
un second module de détermination (305), configuré pour déterminer un angle obtenu par le second module de calcul lorsque le bord d'un autre objet est parallèle à la ligne de mesure comme étant un angle entre un autre objet et le plan horizontal ;
un troisième module de calcul (306), configuré pour calculer une valeur de différence d'un angle en soustrayant l'angle entre un autre objet et le plan horizontal de l'angle entre l'objet et le plan horizontal ; et
un troisième module de détermination (307), configuré pour déterminer une valeur absolue de la valeur de différence comme étant l'angle entre l'objet et un autre objet.

11. Programme informatique, comprenant des instructions destinées à exécuter les étapes d'un procédé de mesure d'un angle selon l'une quelconque des revendications 1 à 5 lorsque ledit programme est exécuté par un ordinateur.

12. Support d'enregistrement lisible par un ordinateur et stockant un programme informatique comprenant des instructions destinées à exécuter les étapes d'un procédé de mesure d'un angle selon l'une quelconque des revendications 1 à 5.
